# EUROPÄISCHE PATENTANMELDUNG

(11) **EP 1 255 236 A2**
(43) Veröffentlichungstag der Anmeldung: **06.11.2002**
(21) Anmeldenummer: 02004046.5
(22) Anmeldetag: 23.02.2002
(51) Int. Cl.: G08G 1/0968, G08G 1/14

(54) **Verfahren und Parkleitsystem zum Suchen eines Parkplatzes**

(30) Priorität: 10.03.2001 DE 10111588
(71) Anmelder: Harman/Becker Automotive Systems (Becker Division) GmbH, 76307 Karlsbad (DE)
(72) Erfinder: Gieseke, Arnold, 31180 Giesen (DE)
(74) Vertreter: Patentanwälte Westphal, Mussgnug & Partner

(57) **Zusammenfassung**

Um das Suchen und Ansteuern eines Parkplatzes mit einem Fahrzeug zu erleichtern, ist das Fahrzeug mit einem Navigationsgerät (N) ausgerüstet, das nach Eingabe eines Zielparkplat zes eine Funkverbindung zu einem Server (S) aufbaut und im Server (S) gespeicherte Daten über die Belegung der Parkplätze abruft und optisch und/oder akkustisch dem Fahrer wiedergibt. Nach Eingabe eines Zielparkplatzes ruft das Navigationsgerät (N) die zum Ansteuern des Zielparkplatzes erforderlichen Daten vom Server (S) ab und leitet den Fahrer zum Zielparkplatz.

## Beschreibung

Die Erfindung betrifft ein Verfahren zum Suchen und Ansteuern eines Parkplatzes mit einem Fahrzeug, das mit einem Navigationsgerät ausgerüstet ist, in einem Gebiet, für das in einem Server abfragbare Daten über die Belegung der Parkplätze gespeichert werden.

Die Erfindung betrifft weiter ein Parkleitsystem zum Suchen und Ansteuern eines Parkplatzes mit einem Fahrzeug, das mit einem Navigationsgerät ausgerüstet ist, in einem Gebiet, für das in einem Server abfragbare Daten über die Belegung der Parkplätze gespeichert sind.

In ADAC Motorwelt 9, 2000, ist auf Seite 68 ein-in der Stadt Freiburg installiertes Parkleitsystem beschrieben.

Auf zahlreichen in der Stadt aufgestellten Anzeigetafeln wird den Autofahrern die jeweils aktuelle Anzahl der auf Parkplätzen und in Parkhäusern freien Parkplätze optisch angezeigt. Außerdem können über das Internet Informationen über die Anzahl der freien Parkplätze, über Fahrpläne und Fahrstrecken des öffentlichen Personennahverkehrs, über Radwege sowie über die Ausstattung, die Gebühren, die Öffnungszeiten und Frauenparkplätze der Parkhäuser abgefragt werden. Es ist geplant, einen Teil dieser Informationen mittels eines Handys, das für das Wireless Application Protokoll - WAP - geeignet ist, abfragen zu können.

Obwohl dieses bekannte Parkleitsystem dem Autofahrer das Suchen und Anfahren eines Parkplatzes bereits erheblich erleichtert, ist es trotzdem noch verbesserungsbedürftig.

Es ist daher Aufgabe der Erfindung, ein Verfahren und ein Parkleitsystem zum Suchen und Ansteuern eines Parkplatzes anzugeben, welches für den Fahrer einfach und bequem zu handhaben ist.

Verfahrensmäßig wird diese Aufgabe mit den im Anspruch 1 angegegebenen Merkmalen gelöst.

Vorrichtungsmäßig wird diese Aufgabe mit den im Anspruch 13 angegebenen Merkmalen gelöst.

Weiterbildungen der Erfindungen sind in den Unteransprüchen angegeben.

Das erfindungsgemäße Verfahren sieht einen Server vor, in welchem Daten über die jeweils aktuelle Belegung der in einem Gebiet, z.B. in einer Stadt, vorhandenen Parkplätze gespeichert werden. Das erfindungsgemäße Verfahren sieht auch vor, Fahrzeuge mit Navigationsgeräten auszurüsten, die eine Funkverbindung zu diesem Server aufbauen, Daten über die Parkplatzbelegung vom Server abrufen und dem Fahrer optisch und/oder akkustisch wiedergeben können, so dass sich der Fahrer in seinem Fahrzeug über die Anzahl und die Dislozierung der freien Parkplätze informieren kann. Der Fahrer kann nun aus dem Angebot an freien Parkplätzen einen Zielparkplatz auswählen und in das Navigationsgerät eingeben, das die zum Ansteuern des Zielparkplatzes erforderlichen Daten vom Server abruft und den Fahrer zum Zielparkplatz leitet.

Anhand eines Ausführungsbeispieles wird das erfindungsgemäße Verfahren näher beschrieben und erläutert.

Es sei angenommen, dass der Fahrer im Ort A sein Fahrzeug an einem Parkplatz abstellen möchte. Der Fahrer gibt den Zielort A in sein Navigationsgerät ein, das eine Funkverbindung zu einem Server aufbaut, in welchem Daten über die aktuelle Parkplatzbelegung am Zielort A gespeichert sind. Nach Aufbau der Funkverbindung zum Server fragt das Navigationsgerät vom Server die Daten über die Parkplatzbelegung ab und zeigt dem Fahrer optisch und/oder akkustisch an, wie viele Parkplätze gegenwärtig auf den einzelnen Parkplätzen und in den einzelnen Parkhäusern frei sind, so dass der Fahrer den für ihn am günstigsten gelegenen Parkplatz auswählen und in das Navigationsgerät eingeben kann. Nach Eingabe des Zielparkplatzes in das Navigationsgerät ruft das Navigationsgerät die zum Ansteuern des Zielparkplatzes erforderlichen Daten, z.B. Straße und Hausnummer des Parkplatzes oder des Parkhauses, vom Server ab und leitet den Fahrer zu dem ausgewählten Zielparkplatz.

Die Suche und das Anfahren eines Parkplatzes wird dem Fahrer erheblich erleichtert, weil er nur noch den Zielort in sein Navigationsgerät eingeben und aus der Liste der angebotenen Parkplätzes einen Zielparkplatz auswählen muß. Daraufhin leitet das Navigationsgerät den Fahrer schnell und sicher zu dem von ihm ausgewählten Zielparkplatz.

Beispielsweise wird dem Fahrer auf einem Display eine Liste der freien Parkplätze oder eine Karte, auf der die Anzahl der freien Parkplätze lagerichtig angegeben sind, gezeigt. Stattdessen oder zusätzlich können die Anzahl und die Dislozierung der freien Parkplätze in einer akkustischen Ansage dem Fahrer mitgeteilt werden.

Die Übertragung der Daten zwischen dem Navigationsgerät und dem Server erfolgt vorzugsweise gemäß dem Wireless Application Protocoll - WAP -.

Im Server sind die Daten z.B. in der Extensible Markup Language - XML - gespeichert. Das Navigationsgerät teilt dem Server mit, in welcher Wireless Markup Language - WML - der Server die Daten zum Navigationsgerät senden soll.

Eine weitere Ausgestaltung des erfindungsgemäßen Verfahrens sieht vor, dass der Server nach Empfang des Zielparkplatzes vom Navigationsgerät die Anzahl der freien Parkplätze aktualisiert.

Eine weitere Ausgestaltung des erfindunsgemäßen Verfahrens sieht vor, dass das Navigationsgerät dem Server das Kraftfahrzeugkennzeichen mitteilt und beim Belegen und Verlassen des Zielparkplatzes das Kraftfahrzeugkennzeichen mittels einer Lesevorrichtung, z.B. einer Videokamera zu lesen, um die Ankunftszeit und die Abfahrtszeit zu erfassen. Aus der Ankunftsund Abfahrtszeit werden die Parkdauer und die Parkgebühren berechnet.

Eine weitere Ausgestaltung des erfindungsgemäßen Verfahrens sieht vor, dass der Fahrer in sein Navigationsgerät die Zahlungsart, z.B. über Kreditkarte, Buchung auf die Telefonrechnung oder Barzahlung, zur Begleichung der Parkgebühren eingeben kann. Das Navigationsgerät teilt die gewünschte Zahlungsart dem Server mit, damit der Fahrer in der von ihm gewünschten Art die Parkgebühren entrichten kann.

Das erfindungsgemäße Parkleitsystem besteht aus einem Server, in welchem Daten über die jeweils aktuelle Belegung der in einem Gebiet, z.B. einer Stadt, vorhandenen Parkplätze gespeichert sind. Die zum Parkleitsystem gehörenden Fahrzeuge sind mit Navigationsgeräten ausgerüstet, die eine Funkverbindung zu dem Server aufbauen können. Der Server und das Navigationsgerät sind so ausgebildet, dass der Datenaustausch gemäß WAP erfolgt. Im Server ist als Programmiersprache XML vorgesehen. Für die Datenübertragung zwischen dem Navigationsgerät und dem Server ist die im Navigationsgerät installierte Variante der Programmiersprache WML vorgesehen.

Vom Navigationsgerät sind Informationen über die aktuelle Parkplatzbelegung, über Parkplatzanlagen sowie Parkhäuser und die Adressen der einzelnen Parkplätze, Parkplatzanlagen und Parkhäuser vom Server abrufbar. Aus diesen Daten berechnet das Navigationsgerät nach Eingabe des Zielparkplatzes die Fahrstrecke zum Zielparkplatz und lotst den Fahrer dorthin.

Das Navigationsgerät ist mit einer optischen und/oder akkustischen Anzeigevorrichtung ausgestattet, um dem Fahrer die vom Server abgerufenen Daten über die aktuelle Parkplatzbelegung optisch, z.B. auf einem Display, anzeigen und/oder akkustisch in einer Ansage mitteilen zu können. Außerdem ist das Navigationsgerät mit einer Eingabevorrichtung ausgerüstet, mittels welcher der Fahrer den Zielort und den Zielparkplatz eingeben kann. Zusätzlich kann die Eingabevorrichtung so erweitert sein, dass der Fahrer auch die Zahlungsart zur Begleichung der Parkgebühren - Barzahlung, über Kreditkarte oder Buchung auf die Telefonrechnung - in das Navigationsgerät eingeben kann.

Ein weiteres Ausführungsbeispiel des erfindungsgemäßen Parkleitsystems sieht vor, an den Parkplätzen, z.B. an der Ein- und Ausfahrt einer Parkplatzanlage oder eines Parkhauses eine Lesevorrichtung, z.B. eine Videokamera, zu installieren, um bei der Ankunft und Abfahrt des Fahrzeuges dessen Kraftfahrzeugkennzeichen zu lesen. Durch diese Maßnahme lassen sich die Ankunfts- und Abfahrtszeit ermitteln, aus denen die Parkdauer und die Parkgebühren berechenbar sind. Vorzugsweise ist das Navigationsgerät so ausgebildet, dass der Fahrer sein Kraftfahrzeugkennzeichen eingeben kann, das vom Navigationsgerät zum Server übertragbar ist.

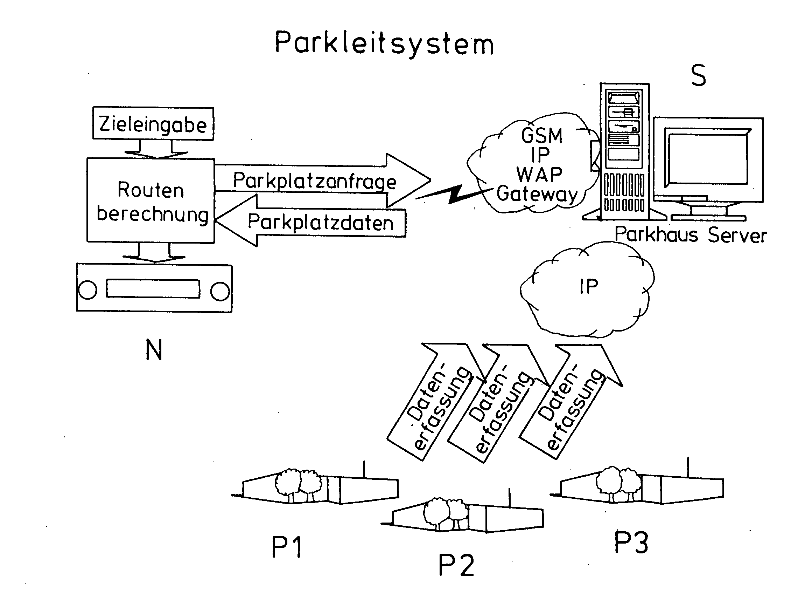

In der Figur ist ein Ausführungsbeispiel eines erfindungsgemäßen Parkleitsystems abgebildet.

Mittels eines Navigationsgerätes N ist eine Funkverbindung zu einem Server S aufbaubar, in welchem Daten über drei Parkhäuser P 1, P 2 und P 3 gespeichert sind. Selbstverständlich können mehr als drei Parkhäuser oder Parkplatzanlagen dem Server zugeordnet sein. Der Server übernimmt die von den Parkhäusern P 1, P 2 und P 3 gelieferten Daten und speichert sie abrufbereit für die Navigationsgeräte der Fahrzeuge.

Der Datenaustausch zwischen dem Navigationsgerät und dem Server erfolgt z.B. gemäß dem Global Standard Formobil Communications, GSM, und gemäß dem Protokoll WAP.

Bezugszeichenliste
- N: Navigationsgerät
- P 1: Parkhaus
- P 2: Parkhaus
- P 3: Parkhaus
- S: Server

## Patentansprüche

1. Verfahren zum Suchen und Ansteuern eines Parkplatzes (P 1, P 2, P 3) mit einem Fahrzeug, das mit einem Navigationsgerät (N) ausgerüstet ist, in einem Gebiet, für das in einem Server (S) abfragbare Daten über die Belegung der Parkplätze (P 1, P 2, P 3) gespeichert werden, **dadurch gekennzeichnet, dass** das Navigationsgerät (N) nach Eingabe eines Zielortes eine Funkverbindung zum Server (S) aufbaut, die Daten über die Parkplatzbelegung vom Server (S) abruft und dem Fahrer optisch und/oder akkustisch wiedergibt.

2. Verfahren nach Anspruch 1, **dadurch gekennzeichnet, dass** nach Eingabe eines Zielparkplatzes das Navigationsgerät (N) die zum Ansteuern des Zielparkplatzes erforderlichen Daten vom Server (S) abruft, die Fahrstrecke berechnet und den Fahrer zum Zielparkplatz leitet.

3. Verfahren nach Anspruch 2, **dadurch gekennzeichnet, dass** das Navigationsgerät (N) die Ortskenndaten des Zielparkplatzes vom Server (S) abruft.

4. Verfahren nach Anspruch 3, **dadurch gekennzeichnet, dass** das Navigationsgerät die Adresse - den Ortsnamen, die Straße und die Hausnummer - des Zielparkplatzes vom Server (S) abruft.

5. Verfahren nach Anspruch 1, 2, 3 oder 4, **dadurch gekennzeichnet, dass** die Datenübertragung zwischen dem Server (S) und dem Navigationsgerät (N) gemäß dem Wireless Application Protocoll - WAP - erfolgt.

6. Verfahren nach einem der vorangehenden Ansprüche, **dadurch gekennzeichnet, dass** die Daten im Server (S) in der Extensible Markup Language - XML - gespeichert werden.

7. Verfahren nach Anspruch 6, **dadurch gekennzeichnet, dass** das Navigationsgerät (N) dem Server (S) mitteilt, in welcher Wireless Markup Language, WML, Daten vom Server (S) zum Navigationsgerät (N) zu übertragen sind.

8. Verfahren nach Anspruch 7, **dadurch gekennzeichnet, dass** der Server (S) Daten zum Navigationsgerät (N) in dem vom Navigationsgerät (N) angeforderten WNL-Format überträgt.

9. Verfahren nach einem der vorangehenden Ansprüche, **dadurch gekennzeichnet, dass** das Navigationsgerät (N) den ausgewählten Parkplatz als belegt an den Server (S) meldet, der daraufhin die Anzahl der freien Parkplätze aktualisiert.

10. Verfahren nach einem der vorangehenden Ansprüche, **dadurch gekennzeichnet, dass** das Navigationsgerät (N) dem Server (S) das Kennzeichen des Fahrzeugs meldet.

11. Verfahren nach Anspruch 10, **dadurch gekennzeichnet, dass** das Navigationsgerät (N) dem Server (S) die vom Fahrer eingegebene Zahlungsart - mittels Kreditkarte, Buchung auf die Telefonrechnung oder Barzahlung - mitteilt.

12. Verfahren nach Anspruch 10 oder 11, **dadurch gekennzeichnet, dass** beim Anfahren und beim Verlassen des Zielparkplatzes das Kraftfahrzeugkennzeichen von einer Lesevorrichtung gelesen und dem Server (S) mitgeteilt wird, um die Parkdauer und die Parkgebühren zu berechnen.

13. Parkplatzleitsystem zum Suchen und Anfahren eines Parkplatzes mit einem Fahrzeug, das mit einem Navigationsgerät (N) ausgerüstet ist, in einem Gebiet, für das in einem Server (S) abfragbare Daten über die Belegung der Parkplätze gespeichert sind, **dadurch gekennzeichnet, dass** nach Eingabe eines Zielortes eine Funkverbindung vom Navigationsgerät (N) zum Server (S) aufbaubar ist und dass vom Navigationsgerät (N) Daten über die Parkplatzbelegung vom Server (S) abrufbar und dem Fahrer optisch und/oder akkustisch wiedergebbar sind.

14. Parkplatzleitsystem nach Anspruch 13, **dadurch gekennzeichnet, dass** nach Eingabe eines Zielparkplatzes die zum Ansteuern des Zielparkplatzes erforderlichen Daten mittels des Navigationsgerätes (N) vom Server (S) abrufbar sind, die Fahrstrecke zum Zielparkplatz berechenbar und der Fahrer zum Zielparkplatz führbar ist.

15. Parkplatzleitsystem nach Anspruch 14, **dadurch gekennzeichnet, dass** mittels des Navigationsgerätes (N) die Ortskenndaten des Zielparkplatzes vom Server (S) abrufbar sind.

16. Parkplatzleitsystem nach Anspruch 15, **dadurch gekennzeichnet, dass** mittels des Navigationsgerätes (N) die Adresse - der Ortsname, die Straße und die Hausnummer - des Zielparkplatzes vom Server (S) abrufbar ist.

17. Parkleitsystem nach einem der Ansprüche 13 - 16, **dadurch gekennzeichnet, dass** das Navigationsgerät (N) für das Wireless Application Protocoll, WAP, geeignet ist.

18. Parkleitsystem nach einem der Ansprüche 13 - 17, **dadurch gekennzeichnet, dass** die Daten im Server (S) in der Extensible Markup Language, XML, gespeichert sind.

19. Parkleitsystem nach Anspruch 18, **dadurch gekennzeichnet, dass** die Daten vom Server (S) in der für das Navigationsgerät (N) erforderlichen Variante der Wireless Markup Language zum Navigationsgerät (N) übertragbar sind.

20. Parkleitsystem nach einem der Ansprüche 13 - 19, **dadurch gekennzeichnet, dass** am Zielparkplatz eine Leseeinrichtung zum Lesen des Kraftfahrzeugkennzeichens vorgesehen ist, um die Ankunfts- und Abfahrtszeit des Fahrzeugs zu erfassen.

21. Parkleitsystem nach Anspruch 20, **dadurch gekennzeichnet, dass** die Parkdauer und die Parkgebühren vom Server (S) anhand der mittels der Leseeinrichtung erfaßten Ankunfts- und Abfahrtszeit errechenbar sind.

22. Parkleitsystem nach einem der Ansprüche 13 - 21, **dadurch gekennzeichnet, dass** die Zahlungsart - mittels Kreditkarte, Buchung auf die Telefonrechnung oder Barzahlung - vom Fahrer in das Navigationsgerät (N) eingebbar und vom Navigationsgerät (N) zum Server (S) übertragbar ist.
